# EUROPEAN PATENT SPECIFICATION

(11) **EP 0 677 003 B1**
(45) Date of publication and mention of the grant of the patent: **15.10.1997**
(21) Application number: 94911769.1
(22) Date of filing: 13.08.1993
(51) Int. Cl.: B60N 2/38

(54) **APPARATUS FOR AUTOMATIC HORIZONTAL ADJUSTMENT OF A SEAT**
GERÄT ZUM AUTOMATISCHEN HORIZONTALEN ANPASSEN EINES SITZES
APPAREIL PERMETTANT LE REGLAGE HORIZONTAL AUTOMATIQUE D'UN SIEGE

(30) Priority: 02.10.1992 SE 9202855
(43) Date of publication of application: 18.10.1995
(73) Proprietor: Sit Right AB, RKN, 791 24 Falun (SE)
(72) Inventor: Carlgren, Klas, 191 77 Sollentuna (SE)
(74) Representative: Stolt, Lars C.
(86) International application number: SE9300675
(87) International publication number: WO9407707

(56) References cited:
- US-A- 3 632 076
- US-A- 3 713 617
- US-A- 4 515 337

## Description

The present invention relates to an apparatus for automatic horizontal adjustment of a seat as specified in the preamble of claim 1. Such an apparatus is known from WO-B 169056.

Known devices for automatic horizontal adjustment of a seat are used for reasons of comfort and ergonomics for compensating inclination at low speed vehicles, such as, for example, tractors or caterpillars. Such a known device, for instance, is disclosed in the above mentioned Norwegian laid-open patent application No. 169 056. This and other known devices for horizontal adjustment share the feature of the seat base being articulately mounted in vertical support elements of the base. Thereby the rotational axis of the seat element thus is positioned between the base and the seat plate. The position of the rotational axis in respect of the seat plate makes known devices to be in a position of instable equilibrium, both in the starting position with the vehicle/base on flat ground as well as in a position in which the vehicle is tilted and the device has compensated for this tilt by a corresponding rotation of the seat element. The purpose with the drive means to also keep the seat plate in its adjusted position in addition to compensating for inclination is a result of this instability. This necessitates dimensioning of the drive means for the additional objective which, per se, does not contribute to the result intended to be achieved.

An objective with the present invention is to disclose an apparatus for automatic horizontal adjustment of a seat of a motor vehicle or a vessel that does not have this disadvantage.

According to the invention the objective is met by the features specified in the characterizing part of claim 1.

For affecting the position of the seat element by the drive means it is preferred to arrange at least one guide in a constant position relative to the rotational axis, said guide being arranged on the side of the seat element facing the base or the side of the base facing the seat element. It is preferred for the guide to have the form of an ellipse segment in its longitudinal extension and to have a rectangular profile in transverse section.

It is furthermore preferred for the drive means to comprise at least one force transfer means affecting said guide. In addition to said force transfer means the drive means preferably comprises an electric motor, a means for reversal of direction of motor rotation and a rotational screw means coupled with the motor axis for cooperation with said force transfer means, said force transfer means surrounding said rotational screw means.

In accordance with a preferred embodiment of the invention the force transfer means comprises wheels or rolls abutable with the lateral walls of the guide, the axes of said wheels or rolls being perpendicular to the base or the seat element. If several guides are used, a feature which is also preferred, each of these guides is provided with at least one wheel abutable with at least one of the lateral walls of the respective guide, the wheel axes being preferably arranged in respect to each other at an angle greater than zero.

According to an advantageous aspect of the invention the force transfer means is arranged for reciprocating movement parallel to the base or the seat element and tangential in respect of the cylinder defined by the edges of the guide.

According to an advantageous aspect of the invention the displaceable connection of the seat element with the base is obtained by cooperating bearing elements fixed directly or indirectly at the base and at the seat element, respectively, at least one of said bearing elements having a bearing surface formed like a cylinder segment, the center of which is defined by the rotational axis, and wherein the bearing element cooperating with the bearing surface formed like a cylinder segment comprises glide, roller or ball means.

As already mentioned it is advantageous for the apparatus according to the invention to comprise two or more guides. Each guide is provided with at least one wheel or roller abutable against at least one lateral wall of the respective guide, the axis of at least one of the wheels and/or rollers being arranged inclined in respect of the base.

It is also of advantage for the wheels or rollers to have the shape of double cones or to have a rounded profile abutable against the lateral walls of the guide, the profile of said lateral walls being adapted to the profile of the wheels or rollers.

Another preferred embodiment of the invention providing multilateral positional compensation comprises a combination of two of the above disclosed apparatus according to the invention for positional compensation sideways or forward/backward, wherein the seat element of the one apparatus for positional compensation forms the base for the other apparatus for positional compensation, and wherein the rotational axes of both apparatus are perpendicular to each other in a vertical projection from above on a horizontal plane. The combined apparatus comprises optionally one or several detection means for monitoring the inclination of the seat.

In the following the invention will be explained in more detail by a preferred but not limiting embodiment of the invention schematically illustrated in a drawing, in which is shown by
- Fig. 1: a lateral perspective view from above of the apparatus for horizontal adjustment according to the invention, after removal of the seat element,
- Fig. 2: the same view as in Fig. 1, additionally having the anterior side support removed,
- Fig. 3: a seat element in top view, from below,
- Fig. 4: the seat element of Fig. 3, in lateral perspective view from above, and
- Fig. 5: the apparatus for horizontal adjustment, complete with the seat element of Fig. 4 mounted.

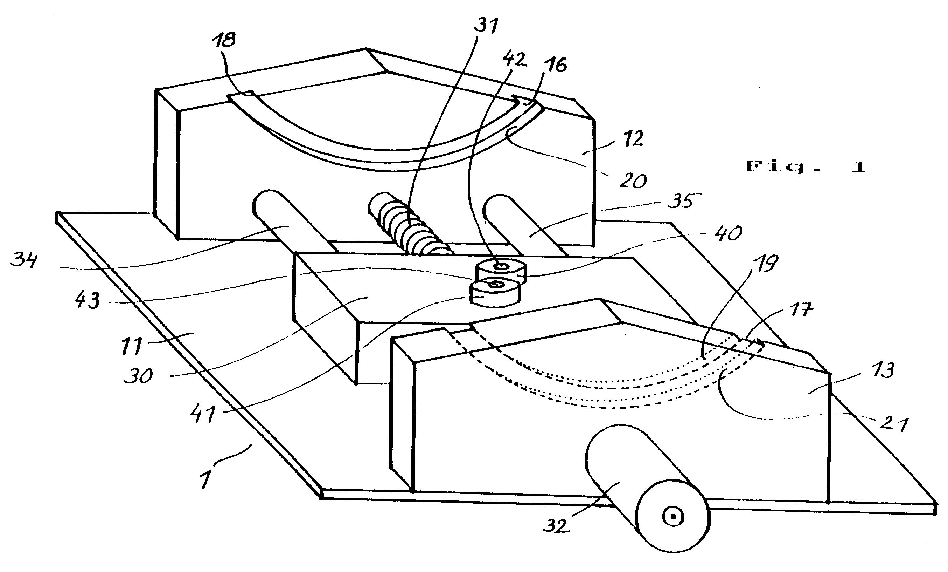

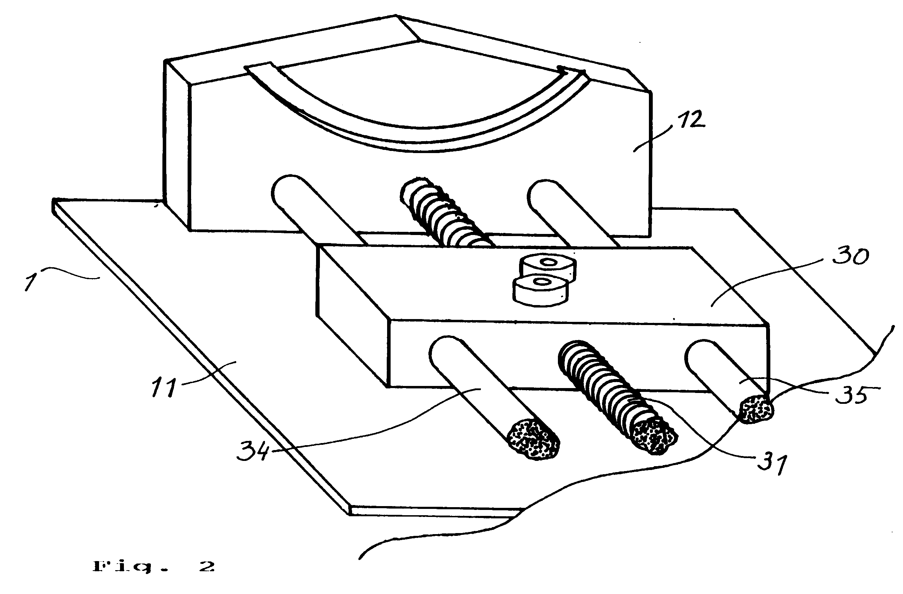

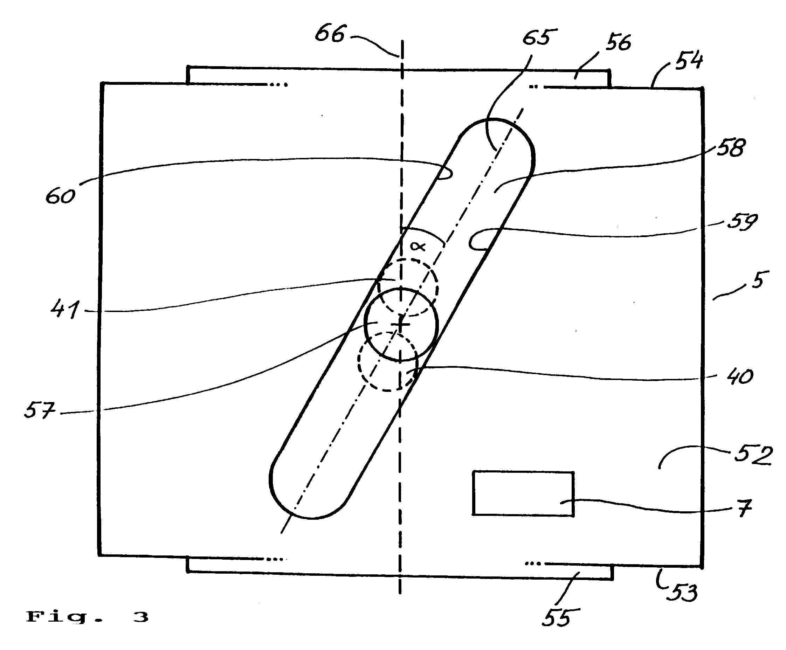

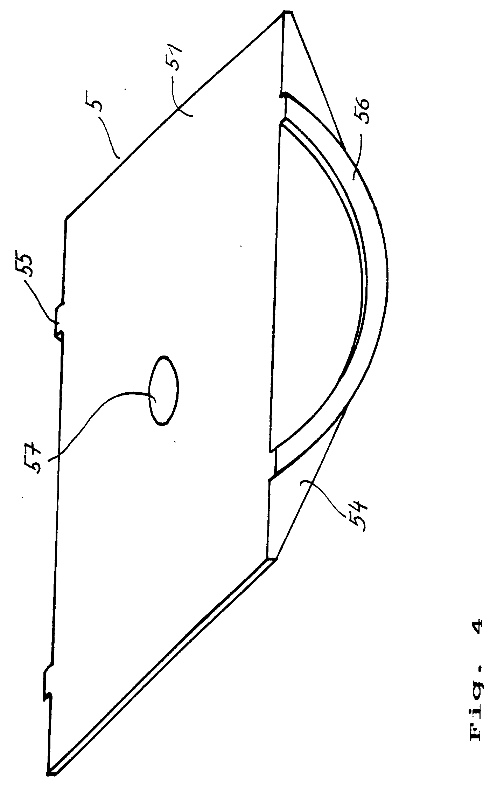

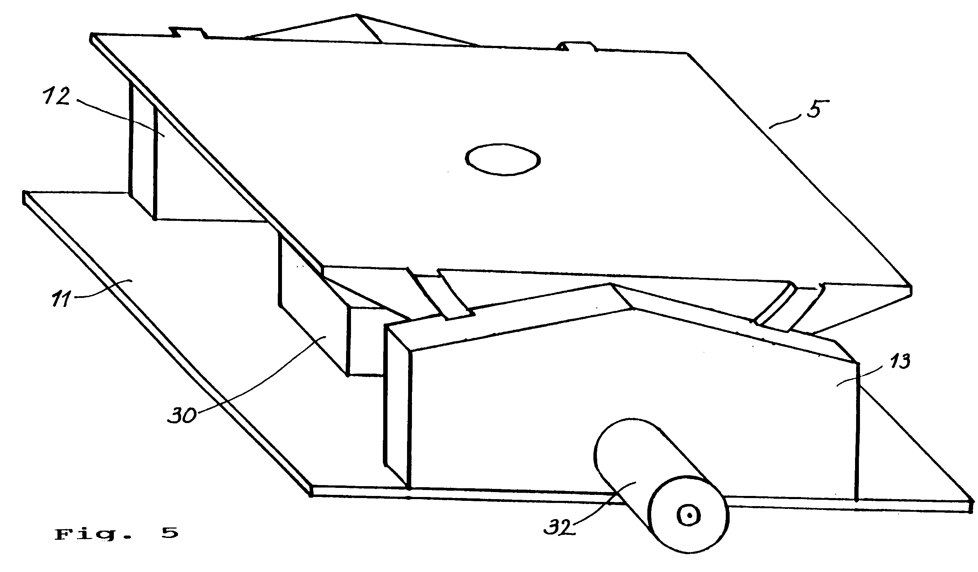

The apparatus for horizontal adjustment shown in Figs. 1 - 5 comprises a base 1, a drive, a seat element or support 5 and a detection means 7.

The base 1 is a rectangular shape-permanent steel plate 11; other materials, such as aluminum and plastic, are also conceivable. Vertical lateral supports 12, 13 are mounted at opposite sides of the plate 1 by screws (not shown) applied from beneath. The base plate 11 is intended for mounting by means of bolts (not shown) at a location in the vehicle where the driver's seat is normally being mounted. The inner walls of lateral supports 12, 13 are provided with glide grooves 16, 17 curved in form of circular segments; the grooves' 16, 17 profile is rectangular in transverse section. The glide grooves 16, 17 are arranged symmetrically, that is, they define the position of a virtual cylinder from the axis of which all points on the upper lateral walls 18, 19 and the lower lateral walls 20, 21, respectively, are equidistant.

Between the points on the lower lateral walls 20, 21 which are at closest distance to the base plate 11 and the base plate 11 one bore each is arranged in the lateral supports 12, 13, of which only that in support 13 is a through bore. The bore in the support 12 is provided with a bushing for supporting the unthreaded end portion of a rotational screw 31 extending with its other end exteriorly of lateral support 13, the other end being rigidly connected with the output shaft of an electric motor 32 (not shown in detail) rigidly mounted at the outside of lateral support 13 and exteriorly of the space between base plate 11 and seat element 5. By polarity reversal the motor 32 can rotate the rotational screw 31 in optional direction of rotation. Since sideways compensation of inclination of a vehicle generally is the most desired one orientation of base plate 11 after its mounting on the vehicle is such that motor 32 will be positioned in front of or behind the seat. By using a compact motor with integrated worm gear the motor can be mounted at the front side of the seat without the protruding motor disturbing the user. Mounting at the front side provides better access for repair and potential arrangement of a manual adjustment means to be used in case of power failure.

Between supports 12, 13 a force transfer element 30 is mounted on the rotational screw 31 and on cylindrical guide bars 34, 35. In this particular embodiment the force transfer element 30 has the form of a rectangular parallelepiped; other forms are, however, conceivable. The screw 31 passes through a threaded bore in the center of the vertical longitudinal sides; the threads in the bore have the same pitch as the threads of rotational screw 31 with which they cooperate. On either side of the threaded bore the force transfer element is provided with two non-threaded through bores having a diameter only slightly larger than the diameter of guide bars 34, 35 making them glide in the respective bore. Guide bars 34, 35 extend parallel with the rotational screw 31 between supports 12, 13 and have a length suitable for being kept fixed after mounting in non-through bores made in supports 12, 13.

On the top side of force transfer element 30 two cam rolls 40, 41 are rotatably mounted on axes 42, 43 perpendicular in respect to the top side. Axes 42, 43 are firmly mounted in holes made in the top side of force transfer element 30 and arranged side-by-side, said holes being arranged unsymmetrically in respect of force transfer element 30 in a way that one cam roll is positioned somewhat closer to support wall 12 and the other cam roll 41 somewhat closer to support wall 13.

The seat element 5 is made in massive light castings (it can, of course, also be made in a number of other materials, such as plastics), and is here about square and flat at its top side 51 and convexly curved at its underside 52 facing base plate 11 in a mounted state, that is, like a segment of a cylinder. The width of seat element 5 as measured between its lateral faces 53 and 54 is slightly smaller than the distance between lateral supports 12, 13. The seat element 5 is provided with circularly curved sliding beads 55, 56 having the same rectangular profile as the circularly curved glide grooves 16, 17 of the lateral supports, the profile width of said glide beads 55, 56 being very slightly reduced in respect to the distance between walls 18 and 20, and 19 and 21, respectively.

At its underside the seat element 5 has a guide 58 for receipt of cam rollers 40, 41, each of which abuts a parallel side wall 59, 60 of guide 58. The guide is drawn through the center of the underside of seat element 5 and extends therefrom obliquely in direction of side walls 59, 60 at an angle α of between about 10° to 45°, the extension being the same in both directions. The angle α is defined as the angle included between the vertical projections of the center line 65 of guide 58 and the axis of rotation 66, said projection being a projection on the plane defined by the top side 51 of seat element 5 in its parallel position in respect of the base plate 11. The section of the edges of lateral walls 59, 60 with the part of the underside of seat element 5 where guide 58 is arranged resembles an ellipse segment.

On its top side the seat element 5 has threaded bores (not shown) for mounting the driver's seat. On its underside the driver's seat has a mounting plate (not shown) with wider extension than than the top surface of the seat support; the mounting plate is attached with screws fastened in said bores and is provided with a circumferential removable rubber bellows surrounding the apparatus for horizontal adjustment and protecting it against dust and dirt. The detection means 7 (not shown in detail) is attached in a recess to the underside 52 of seat element 5.

The apparatus for horizontal adjustment shown in Fig. 1 is mounted in the following way. Support 12 is mounted on base plate 11. Guide bars 34, 35 are inserted into the bores arranged for them in support 12 and the force transfer means is slided on guide bars 34, 35. Thereafter the free ends of guide bars 34, 35 are inserted into the bores arranged for them in support 13 which is then mounted on the base plate. The rotational screw 31 is guided through the bore made in support 13 towards the threaded hole in the force transfer means 30 and is then screwed into that hole until the front end extends into the bore arranged in support 12 to receive the free end of rotational screw 31, said bore being provided with a fitting bushing. The motor shaft is coupled to the end of rotational screw 31 adjacent to the motor and the motor 32 is secured by screwing it to the outside of lateral support 13. Seat element 5 is inserted with its glide beads 55, 56 into glide guides 16, 17 of the lateral support until its top face 51 is in a horizontal position, in which position a mounting through hole 57 arranged in the center of seat element 5 is positioned above the hole (not shown) provided in the force transmission means 30 for mounting of cam roller 40 shaft 42, thus enabling mounting to take place. The other cam roller 41 is mounted after bringing mounting hole 57 in an overlapping position with the hole (also not shown) arranged to receive axis 43 of cam roller 41, the positioning being obtained by turning the rotational screw a few windings.

The diameter of mounting hole 57 is the same as or slightly smaller than the width of guide 58. Thereafter the seat is mounted on the seat element and required electric circuit connections are made, comprising connection of the motor/control unit to a power source, such as, for example, the battery of the vehicle. Instead of mounting base plate 11 on the floor portion of the vehicle it can be mounted on a base attached to that floor portion, said base being rotatable by hand and lockable in any position.

The mechanical function of the apparatus is easy to understand. Starting motor 32 sets rotational screw 31 in rotation and thereby displaces the force transfer means 30 in a directon from or towards motor 32, depending on direction of rotation. Thereby cam rollers 40, 41 affect the respective lateral wall 59, 60 of guide 58 and force the seat element's glide beads 55, 56 to glide in glide guides 16, 17, thereby slightly turning the seat plate around its rotational axis 66.

The mechanical function is used for automatic horizontal adjustment by arranging a position monitoring means 7 on the underside of seat plate 5 or other suitable location, said monitoring means inducing a control circuit to provide the motor with control commands required for automatic positional control. Such means for positional detection and control circuits are referred to, i.a., in the aforementioned Norwegian patent application no. 169 056. On deviation of the seat element's 5 plane 51 from horizontal position a control signal is created which, depending on whether the deviation being negative or position, makes the motor rotate 32 and the rotational screw 31 to displace the force transfer means 30 by means of cam rollers 40, 41 in the direction effective for compensation of positional deviation.

Also possible is a "reverse" solution of the problem of driving of seat element 5, mirroring the above described solution. In this "reverse" solution the motor and the force tranfer means are attached to seat element 5, preferably at its underside, and the guide is arranged at the top side of base 1. In such case base 1 is no longer flat but has a surface on its top side which, in principle, is complementary to the underside 52 of seat element 1, that is, concavely curved. By suitable measures the expert in the art will adapt the above described movable connection of the seat element 5 with the base 1 to the "reverse" solution. The latter has the advantage of additional saving of space but is technically somewhat more complicated.

## Claims

1. Apparatus for automatic horizontal adjustment of a seat, in particular a seat of a motor vehicle or a vessel, said apparatus comprising a base (1), a drive means (30-32), a seat element (5), said seat element (5) being displaceably connected with the base (1) and said drive means being designed to affect the position of the seat element, said seat element (5) being arranged for restricted rotation about an axis (66) of rotation parallel with the base (1), at least one detection, means (7) for detection of the position of the seat element (5) in respect of the horizontal plane, and control means for control of the drive means (30-32), said control means being coupled with the detection means (7), **characterized** in that the seat element (5) is arranged between the rotational axis (66) and the base (1) and in that, for affecting the position of the seat element (5) by the drive means, at least one guide (58) is arranged in a constant position relative to the rotational axis (66), said guide (58) being arranged on the side of the seat element (5) facing the base (1) or the side of the base (1) facing the seat element (5).

2. The apparatus of claim 1,
**characterized** in that in its longitudinal extension the guide (58) has about the form of an ellipse segment.

3. The apparatus of claim 1 or 2,
**characterized** in that the guide (58) has a rectangular profile in transverse section.

4. The apparatus of any of claims 1 to 3,
**characterized** in that the drive means comprises at least one force transfer means (30) for affecting the guide (58).

5. The apparatus of any of claims 2 to 4,
**characterized** in that the drive means comprises at least one force transfer means (30) for affecting the guide (58).

6. The apparatus of claims 5,
**characterized** in that the drive means, in addition to said force transfer means (30), comprises an electric motor (32), a means for reversal of direction of motor rotation and a rotational screw means (31) coupled with the motor axis for cooperation with said force transfer means (30), said force transfer means (30) surrounding said rotational screw means (31).

7. The apparatus of claim 5 or 6,
**characterized** in that the force transfer means comprises wheels or rolls (40, 41), each roll or wheel being abutable with at least one of the lateral walls (59, 60) of the guide means (40, 41).

8. The apparatus of claims 7,
**characterized** in that the axes (42, 43) of said wheels or rolls (40, 41) are perpendicular to the base (1) or the seat element.

9. The apparatus of any of claims 6 to 8,
**characterized** in that the force transfer means (30) is arranged for reciprocating movement parallel to the base (1) or the seat element and tangential in respect of the cylinder defined by the edges of the guide (58).

10. The apparatus according to any of preceding claims, **characterized** in that the displaceable connection of the seat element (5) with the base (1) is obtained by cooperating bearing elements (16, 17; 55, 56) fixed directly or indirectly at the base (1) and at the seat element (5), respectively, at least one of said bearing elements having a bearing surface formed like a cylinder segment (18, 20; 19, 21), the center of which is defined by the rotational axis (66).

11. The apparatus according to claim 11,
**characterized** in that the bearing element (16, 17) cooperating with the cylindrical bearing surface (18, 20; 19, 21) comprises glide, roller or ball means.

12. The apparatus according to any of claims 2 - 11,
**characterized** in that it comprises two or more guides and for each guide at least one wheel or roller abutable against one of the lateral walls of said each guide, the axis of at least one of the wheels and/or rollers being arranged inclined in respect of the base (1).

13. The apparatus according to any of claims 2 - 11,
**characterized** in that the wheels (40, 41) or rollers have the shape of double cones or have a rounded profile abutable against the lateral walls of the guide (58), the profile of said lateral walls being adapted to the profile of the wheels or rollers.

14. A combination of two apparatuses according to any of preceding claims, **characterized** in that the seat element (5) of one apparatus for positional compensation forms the base (1) for the other apparatus for positional compensation, the rotational axes (66) of both apparatuses being arranged perpendicular to each other in a vertical projection from above on a horizontal plane, the combined apparatus optionally comprising one or several detection means (7) for monitoring the inclination of the seat.

## Patentansprüche

1. Vorrichtung für die automatische waagerechte Positionierung eines Sitzes, insbesondere eines Sitzes eines Motorfahrzeugs oder eines Schiffs, wobei besagte Vorrichtung eine Grundplatte (1); ein Antriebsmittel (30-32); ein Sitzelement (5), wobei das besagte Sitzelement (5) verschiebbar mit der Grundplatte (1) verbunden ist und wobei das besagte Antriebsmittel so ausgelegt ist, daß es die Position des Sitzelements beeinflussen kann, und wobei das besagte Sitzelement (5) so angeordnet ist, daß es eine begrenzte Drehbewegung um eine Drehachse (66) ausführen kann, die parallel zur Grundplatte (1) verläuft; mindestens ein Erkennungsmittel (7) zum Erkennen der Lage des Sitzelements in Relation zur Waagerechten sowie Steuermittel zur Steuerung der Antriebsmittel (30-32) beinhaltet, wobei die besagten Steuermittel mit dem Erkennungsmittel (7) gekoppelt sind; **dadurch gekennzeichnet,** daß das Sitzelement (5) zwischen der Drehachse (66) und der Grundplatte (1) angeordnet ist, und daß zur Beeinflussung der Position des Sitzelements (5) mit Hilfe der Antriebsmittel mindestens eine Führung (58) in einer festen Position relativ zur Drehachse (66) angeordnet ist, wobei besagte Führung (58) auf der Seite des Sitzelements (5) angeordnet ist, die der Grundplatte (1) gegenüberliegt, oder auf der Seite der Grundplatte (1) angeordnet ist, die dem Sitzelement (5) gegenüberliegt.

2. Vorrichtung nach Anspruch 1, **dadurch gekennzeichnet,** daß die Führung (58) in ihrer Längsrichtung etwa die Form eines Ellipsensegments hat.

3. Vorrichtung nach Anspruch 1 oder 2, **dadurch gekennzeichnet,** daß die Führung (58) im Querschnitt ein rechteckiges Profil hat.

4. Vorrichtung nach einem der Ansprüche 1 bis 3, **dadurch gekennzeichnet,** daß das Antriebsmittel mindestens ein Kraftübertragungsmittel (30) zur Beeinflussung der Führung (58) hat.

5. Vorrichtung nach einem der Ansprüche 2 bis 4, **dadurch gekennzeichnet,** daß das Antriebsmittel mindestens ein Kraftübertragungsmittel (30) zur Beeinflussung der Führung (58) hat.

6. Vorrichtung nach Anspruch 5, **dadurch gekennzeichnet,** daß das Antriebsmittel zusätzlich zu dem besagten Kraftübertragungsmittel (30) ebenfalls einen Elektromotor (32), ein Mittel zur Umkehrung der Drehrichtung des Motors und eine rotierende Schnecke (31) beinhaltet, die mit der Motorwelle verbunden ist und mit dem besagten Kraftübertragungsmittel (30) zusammenwirkt, wobei besagtes Kraftübertragungsmittel (30) die besagte rotierende Schnecke (31) umschließt.

7. Vorrichtung nach Anspruch 5 oder 6, **dadurch gekennzeichnet,** daß das Kraftübertragungsmittel Räder oder Rollen (40, 41) beinhaltet, wobei jedes Rad oder jede Rolle sich gegen mindestens eine der Innenwände (59, 60) der Führung (58) abstützt.

8. Vorrichtung nach Anspruch 7, **dadurch gekennzeichnet,** daß die Achsen (42, 43) der besagten Räder oder Rollen (40, 41) senkrecht zur Grundplatte (1) angeordnet sind.

9. Vorrichtung nach einem der Ansprüche 6 bis 8, **dadurch gekennzeichnet,** daß das Kraftübertragungsmittel (30) eine Hin- und Herbewegung parallel zur Grundplatte oder zum Sitzelement und tangential zu dem Zylinder ausführen kann, der durch die Kanten der Führung (58) definiert wird.

10. Vorrichtung nach einem der vorangegangenen Ansprüche, **dadurch gekennzeichnet,** daß die verschiebbare Verbindung des Sitzelements (5) mit der Grundplatte (1) durch zusammenwirkende Lagerelemente (16, 17; 55, 56) erhalten wird, die direkt oder indirekt an der Grundplatte (1) bzw. dem Sitzelement (5) befestigt sind, und wobei mindestens eines der besagten Lagerelemente eine Druckfläche in Form eines Zylindersegments (18, 20; 19, 21) hat, deren Mittelpunkt durch die Drehachse (66) definiert wird.

11. Vorrichtung nach Anspruch 11, **dadurch gekennzeichnet,** daß das mit den zylinderförmigen Druckflächen (18, 20; 19, 21) zusammenwirkende Lagerelement (16, 17) Gleit-, Rollen- oder Kugelmittel enthält.

12. Vorrichtung nach einem der Ansprüche 2 bis 11, **dadurch gekennzeichnet,** daß die Vorrichtung zwei oder mehrere Führungen und für jede Führung mindestens ein Rad oder eine Rolle, das oder die sich gegen die Innenwände jeder der besagten Führungen abstützt, beinhaltet, wobei die Achse mindestens eines der Räder oder/und einer der Rollen relativ zur Grundplatte (1) geneigt angeordnet ist.

13. Vorrichtung nach einem der Ansprüche 2 bis 11, **dadurch gekennzeichnet,** daß die Räder (40, 41) oder Rollen die Form eines Doppelkonus oder ein abgerundetes Profil haben, der/das sich gegen die Innenwände der Führung (58) abstützt, wobei das Profil der besagten Innenwände dem Profil der Räder oder Rollen angepaßt ist.

14. Kombination von zwei Vorrichtungen entsprechend einem der vorangegangenen Ansprüche, **dadurch gekennzeichnet,** daß das Sitzelement (5) einer Vorrichtung zum Lageausgleich die Grundplatte (1) für die andere Vorrichtung zum Lageausgleich bildet, wobei die Drehachsen (66) beider Vorrichtungen so angeordnet sind, daß sie - gesehen als senkrechte Projektion von oben auf eine Waagerechte - im rechten Winkel zueinander stehen, wobei die kombinierte Vorrichtung wahlweise ein oder mehrere Erkennungsmittel (7) zur Überwachung der Sitzneigung beinhaltet.

## Revendications

1. Dispositif pour l'ajustement horizontal automatique d'un siège, en particulier d'un siège pour véhicule automobile ou d'un vaisseau, le dispositif comprenant une base (1), un moyen d'entraînement (30, 32), un élément de siège (5), l'élément de siège (5) étant raccordé de façon déplaçable avec la base (1) et le moyen d'entraînement étant conçu pour affecter la position de l'élément de siège, cet élément de siège (5) étant apte à une rotation limitée autour d'un axe (66) de rotation parallèle avec la base (1), au moins un moyen de détection (7) pour la détection de la position de l'élément de siège (5) par rapport au plan horizontal, et des moyens de commande pour commander les moyens d'entraînement (30, 32), ces moyens de commande étant accouplés au moyen de détection (7), caractérisé en ce que l'élément de siège (5) est disposé entre l'axe rotationnel (66) et la base (1) et en ce que, pour affecter la position de l'élément de siège (5) par les moyens de commande, il est prévu au moins un guidage (58) disposé dans une position constante par rapport à l'axe rotationnel (66), ce guidage (58) étant disposé sur le côté de l'élément de siège (5) en regard de la base (1) ou le côté de la base (1) en regard de l'élément de siège (5).

2. Appareil selon la revendication 1,
caractérisé en ce que dans son prolongement longitudinal, le guidage (58) a approximativement la forme d'un segment d'ellipse.

3. Appareil selon la revendication 1 ou 2,
caractérisé en ce que le guidage (58) a un profilé rectangulaire en section transversale.

4. Appareil selon l'une quelconque des revendications 1 à 3,
caractérisé en ce que les moyens de commande comprennent au moins un moyen de transfert de force (30) pour affecter le guidage (58).

5. Appareil selon l'une quelconque des revendications 2 à 4,
caractérisé en ce que les moyens d'entraînement comprennent au moins un moyen de transfert de force (30) pour affecter le guidage (58).

6. Appareil selon la revendication 5,
caractérisé en ce que les moyens d'entraînement en plus des moyens de transfert de force (30), comprennent un moteur électrique (32), un moyen pour inverser la direction de rotation du moteur et une vis rotationnelle (31) accouplée à l'axe du moteur pour coopérer avec les moyens de transfert de force (30), ces moyens de transfert de force (30) entourant la vis rotationnelle (31).

7. Appareil selon la revendication 5 ou 6, caractérisé en ce que les moyens de transfert de force comprennent des roues ou rouleaux (40, 41), chaque rouleau ou roue pouvant venir en butée sur au moins l'une des parois latérales (59, 60) des moyens de guidage (40, 41).

8. Appareil selon la revendication 7, caractérisé en ce que les axes (42, 43) des roues ou rouleaux (40, 41) sont perpendiculaires à la base (1) ou à l'élément de siège.

9. Appareil selon l'une quelconque des revendications 6 à 8,
caractérisé en ce que les moyens de transfert de force (30) sont aptes à effectuer un mouvement de va-et-vient parallèle à la base (1) ou à l'élément de siège et tangentiel par rapport au cylindre défini par les bords du guidage (58).

10. Appareil selon l'une quelconque des revendications précédentes,
caractérisé en ce que le raccord déplaçable de l'élément de siège (5) avec la base (1) s'obtient par coopération des éléments porteurs (16, 17 ; 55, 56) fixés directement ou indirectement sur la base (1) et sur l'élément de siège (5) respectivement, au moins l'un des éléments porteurs ayant une surface porteuse formant approximativement un segment de cylindre (18, 20 ; 19, 21) dont le centre est défini par l'axe de rotation (66).

11. Appareil selon la revendication 1,
caractérisé en ce que l'élément porteur (16, 17) coopérant avec la surface porteuse cylindrique (18, 20 ; 19, 21) comprend des moyens de coulissement, des roulements ou billes.

12. Appareil selon l'une quelconque des revendications 2 - 11,
caractérisé en ce qu'il comprend deux ou plus de deux guidages et pour chaque guidage au moins une roue ou rouleau pouvant venir en butée sur l'une des parois latérales de chaque guidage, l'axe d'au moins l'une des roues et/ou rouleaux étant disposé de façon inclinée par rapport à la base (1).

13. Appareil selon l'une quelconque des revendications 2 - 11,
caractérisé en ce que les roues (40, 41) ou rouleaux ont la forme de double cône ou présentent un profilé arrondi pouvant venir en butée contre les parois latérales du guidage (58), le profil des parois latérales étant adapté au profil des roues ou rouleaux.

14. Combinaison de deux appareils selon l'une quelconque des revendications précédentes,
caractérisée en ce que l'élément de siège (5) d'un appareil pour la compensation de position forme la base (1) de l'autre appareil pour la compensation de position, les axes de rotation (66) des deux appareils étant disposés perpendiculairement l'un par rapport à l'autre en projection verticale du dessus sur un plan horizontal, l'appareil combiné comprenant facultativement un ou plusieurs moyens de détection (7) pour contrôler l'inclinaison du siège.
